# EUROPÄISCHE PATENTSCHRIFT

(11) **EP 1 219 160 B1**
(45) Veröffentlichungstag und Bekanntmachung des Hinweises auf die Patenterteilung: **23.03.2005**
(21) Anmeldenummer: 01129684.5
(22) Anmeldetag: 13.12.2001
(51) Int. Cl.: A01F 7/06, A01F 12/54

(54) **Mähdrescher mit einer Kanaleinrichtung zur pneumatischen Reinigung einer Axialtrenneinrichtung**
Combine with a channel for pneumatically cleaning an axial flow separator device
Moissonneuse-batteuse avec un canal pour le nettoyage pneumatique d'un dispositif séparateur à écoulement axial

(30) Priorität: 21.12.2000 US 746463
(43) Veröffentlichungstag der Anmeldung: 03.07.2002
(73) Patentinhaber: DEERE & COMPANY, Moline, Illinois 61265-8098 (US)
(72) Erfinder: Sheidler, Alan David, Moline, IL 61265 (US); Frana-Guthrie, Rebecca Ann, Coal Valley, IL 61240 (US)
(74) Vertreter: Holst, Sönke, Dr.

(56) Entgegenhaltungen:
- US-A- 4 284 086
- US-A- 4 957 467
- US-A- 5 088 960

## Beschreibung

Die Erfindung betrifft einen Mähdrescher mit einer Axialtrenneinrichtung für Erntegut, einem Ventilator und einer Kanaleinrichtung, die einen vom Ventilator erzeugten Luftstrom zur Oberseite der Axialtrenneinrichtung leitet, um Verunreinigungen von ihr fortzublasen, wobei die Kanaleinrichtung eine Leitung umfasst, die einen Einlass, der sich im Wesentlichen horizontal bewegende Luft vom Ventilator aufnimmt, und einen Auslass, aus dem Luft im Wesentlichen vertikal nach unten ausströmt, aufweist.

Beim Dreschen geernteten Guts wird das Korn vom Stroh und der Spreu getrennt und in einem Sammelbehälter abgelegt. Bei konventionellen Mähdreschern wird das geerntete Gut einer quer angebrachten Dreschtrommel und einem Dreschkorb zugeführt, wo das Gut gedroschen wird, wobei das Korn vom Stroh getrennt wird. Die Reste werden dann einer Leittrommel zugeführt, die auch das Korn vom Stroh trennt. Die Strohreste werden dann über oszillierende, mit Öffnungen versehene Strohschüttler geführt, die das Stroh an der Rückseite des Mähdreschers auswerfen, während sie es noch im Stroh vorhandenem Korn ermöglichen, durch die Öffnungen zu fallen. Korn und Spreu, die durch den Dreschkorb und die Strohschüttler hindurch nach unten fallen, werden einer Siebeinrichtung zugeführt, um die Spreu vom Korn zu trennen. Ein Gebläsezusammenbau wird bei diesem letzten Schritt verwendet, um die leichtere Spreu vom schwereren Korn fortzublasen.

Bei einem Axialmähdrescher wird das Korn einem zylindrischen Rohr zugeführt, das einen Rotor enthält. Das geerntete Gut wir im zylindrischen Rohr gedroschen und getrennt, wobei das Korn und die Spreu auf ähnliche Weise wie beim konventionellen Mähdrescher daraus herausfallen. Die Fa. Case International in Racine, Wisconsin, USA, produziert und vermarktet derzeit einen derartigen Mähdrescher mit einem einzigen Rotor. Die Fa. New Holland in New Holland, Pennsylvania, USA, produziert und vermarktet diesen Typ von Mähdrescher, wobei ein Paar von Rotoren seitlich nebeneinander angeordnet sind.

Eine Hybridmaschine mit einer quer angeordneten Dreschtrommel und einem Paar axialer Trenneinheiten ist in der US 4 739 773 A offenbart, deren Offenbarung durch Verweis hierin mit aufgenommen wird. Die axialen Trenneinheiten umfassen zylindrische Rohre, in denen Rotoren aufgenommen sind. Es wurde herausgefunden, dass sich Staub, Spreu und andere Verunreinigungen auf den Oberseiten der axialen Trenneinrichtungen ansammeln.

Es ist bekannt, einen Luftkanal bereitzustellen, der mit einem Luftstrom von einem Ventilator eines Kühlsystems beaufschlagt wird, um Verunreinigungen vom oberen Bereich einer axialen Trenneinheit fortzublasen, siehe US-A-5 088 960. Ein derartiger Kanal neigt dazu, Luft am Fließen durch das Kühlsystem und den Ventilator zu hindern oder zu blockieren. Es wäre wünschenswert, einen derartigen Kanal bereitzustellen, der die Blockierung des Luftstroms durch das Kühlsystem reduziert oder minimiert, so dass das Kühlsystem effizienter arbeiten kann. Derartige Kanäle sind typischerweise in der Nähe des Motors angeordnet und können den Zugang des Bedieners zum Motor bei Wartungsarbeiten behindern. Es wäre wünschenswert, einen derartigen Kanal bereitzustellen, der relativ klein ist, so dass der Motor um ein geringeres Maß versperrt ist. Diese Kanäle sind geschaffen, um Verunreinigungen von der Oberseite axialer Trenneinheiten zu blasen; es wäre daher ein Kanal wünschenswert, der einen Luftrom mit hinreichendem Volumen und Geschwindigkeit bereitstellt, um effektiv Verunreinigungen von dieser Fläche fort zu blasen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung bezieht sich auf die Verwendung von Kühlluft für den Motor, um pneumatisch Staub, Spreu und andere Verunreinigungen von der Oberseite einer Axialtrenneinrichtung und den Antriebseinrichtungen ihres Rotors zu blasen. Eine Kanaleinrichtung leitet Kühlluft vom Kühlsystem des Motors zur Oberseite der Axialtrenneinrichtung und der Rotorantriebseinrichtungen. Die Kanaleinrichtung umfasst eine bogenförmig gekrümmte Leitung, die einen in der Nähe des - zur Beaufschlagung des Motors mit Kühlluft - dienenden Ventilators angeordneten Einlass aufweist, um vom Ventilator einen sich im Wesentlichen horizontal bewegenden Luftstrom aufzunehmen. Die Leitung erstreckt sich in einem Bogen, um den Luftstrom allmählich im Wesentlichen vertikal nach unten auf die Oberseite der Axialtrenneinrichtung umzuleiten. Die Leitung weist einen verengten Abschnitt auf, der eine relativ kleine Querschnittsfläche hat, in der sich der Luftstrom bewegt. Dieser verengte Abschnitt dient als Einschränkung, die den Luftstrom an dieser Stelle im Wesentlich davon abhält, nach oben zu wirbeln.

Auf diese Weise wird der Fluss durch die Leitung verbessert.

Der Auslass der Leitung kann sich vom verengten Abschnitt nach außen erweitern, um eine größere Querschnittsfläche zu definieren, in der die sich der Luftstrom bewegen kann, wodurch der Fluss durch die Leitung weiter verbessert wird.

Ein Deflektor kann den Luftstrom stromab des Auslasses in einen nach vorn und einen nach hinten gerichteten Teil aufteilen.

In der Zeichnung ist ein nachfolgend näher beschriebenes Ausführungsbeispiel der Erfindung dargestellt. Es zeigt:
- Fig. 1: eine halbschematische Seitenansicht eines Mähdreschers mit einer quer angeordneten Dreschtrommel und einer Axialtrenneinheit,
- Fig. 2: eine halbschematische Draufsicht auf den Mähdrescher,
- Fig. 3: eine perspektivische Ansicht der Kanaleinrichtung im Mähdrescher,
- Fig. 4: eine Ansicht der Kanaleinrichtung,
- Fig. 5: eine Draufsicht auf die Kanaleinrichtung, und

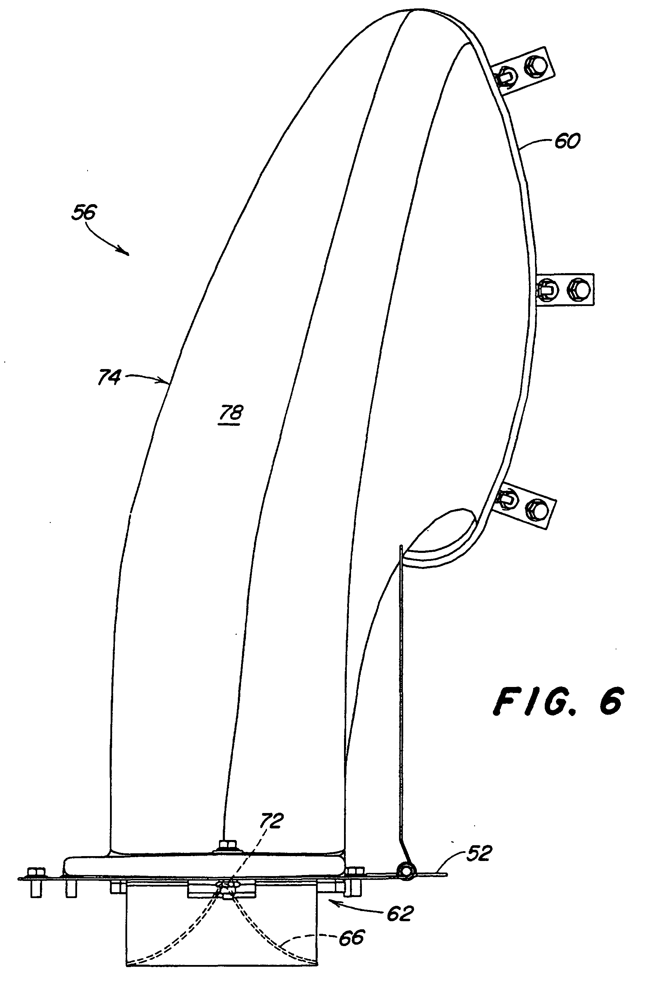

- Fig. 6: eine Ansicht der Kanaleinrichtung, in der in Phantomansicht ein am Auslass des Kanals angeordneter Deflektor gezeigt wird.

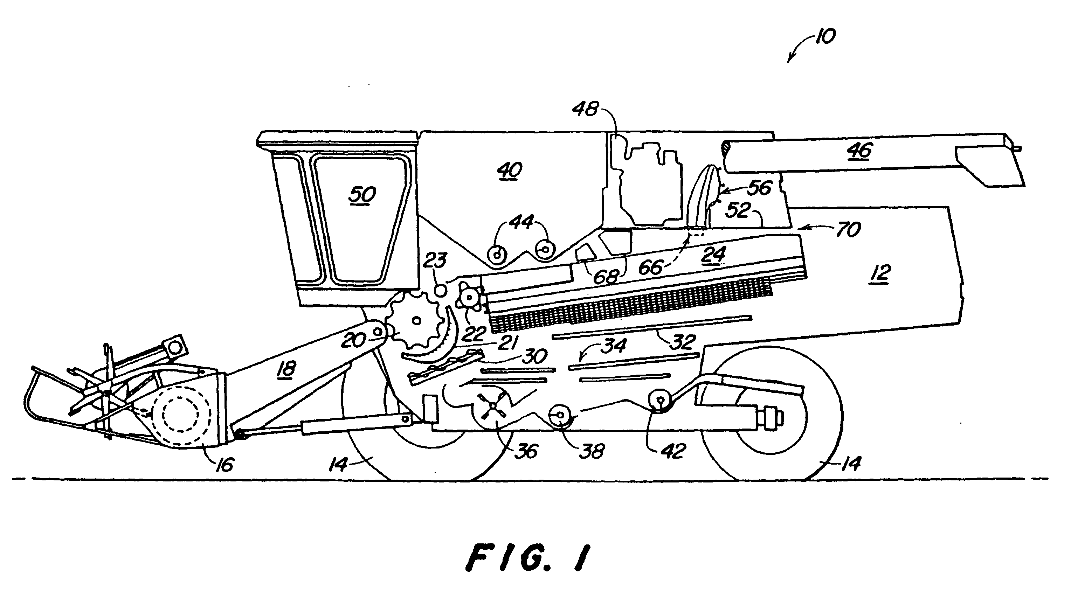

Figur 1 illustriert eine Erntemaschine in Form eines selbstfahrenden Mähdreschers 10 mit einer tragenden Struktur 12. Die tragende Struktur 12 wird durch Räder 14 umfassende, im Eingriff mit dem Boden stehende Einrichtungen abgestützt und vorangetrieben. Die im Eingriff mit dem Boden stehenden Räder 14 werden durch Vortriebsmittel angetrieben, die einen Motor 48 zum Vortreiben des Mähdreschers 10 über ein Feld umfassen. Der vordere Teil des Mähdreschers 10 ist mit einem Schneidwerk 16 ausgestattet, um auf einem Feld stehendes Gut zu ernten und das geerntete Gut durch einen Schrägförderer 18 nach oben zu fördern und dem Dresch- und Trennmechanismus zuzuführen. Der Dresch- und Trennmechanismus umfasst eine quer angeordnete Dreschtrommel 20 und einen zugehörigen Dreschkorb 21, dem das geerntete Gut zuerst zugeführt wird. Das gedroschene Gut wird dann einer Abstreifwalze 23 und einer Leittrommel 22 zugeführt, von dem es in die Axialtrenneinrichtung 24 eintritt.

Eine ähnliche Axialtrenneinrichtung 24 ist in der US 4 884 994 offenbart, die durch Verweis hier mit aufgenommen wird. Eine derartige Axialtrenneinrichtung umfasst ein Paar seitlich nebeneinander angeordneter Rohre. Jedes Rohr ist mit einem Rotor ausgestattet, der feste Finger oder Zinken aufweist. Gedroschenes Gut von der Leittrommel 22 wird von oben in die Rohre geleitet, wo es in den Eingriff der Rotoren kommt. Die obere Innenseite jedes Rohrs ist mit Kufen ausgestattet, um das Erntegut nach hinten zu fördern, wobei die Rotorzinken das Gut nach oben werfen, um es mit den Kufen in Eingriff zu bringen. Die Unterseite jedes der Rohre ist mit Rosten versehen, durch die Korn und Spreu auf den Vorbereitungsboden 32 fallen. Strohreste werden an der Rückseite der Rohre ausgeworfen.

Korn und Spreu, die aus den Dresch- und Trenneinrichtungen herausfallen, fallen auf einen Schneckenförderer 30 und den Vorbereitungsboden 32, die das Korn und die Spreu zum Siebkasten 34 fördern. Der Siebkasten 34 ist mit einem Gebläsezusammenbau 36 ausgestattet, um die Trennung des Korns von der Spreu zu unterstützen. Sauberes Korn wird von einem quer angeordneten Schneckenförderer 38 einem (nicht gezeigten) Elevator zugeführt, der das Korn in einen Korntank 40 fördert. Ein quer angeordneter Überkehrschneckenförderer 42 leitet nicht ausgedroschene Ähren über einen anderen (nicht gezeigten) Elevator zurück zur Drescheinrichtung. Sauberes Korn wird aus dem Korntank 40 über ein Entladesystem entladen, das quer angeordnete Schneckenförderer 44 und einen Entladeschneckenförderer 46 umfasst.

Alle verschiedenen Systeme werden durch einen Verbrennungsmotor 48 mit innerer Verbrennung angetrieben, der durch den Bediener aus der Bedienerkabine 50 gesteuert wird. Die Drescheinrichtungen, Trenneinrichtungen und Reinigungseinrichtungen sind innerhalb der Seitenwände der tragenden Struktur 12 angeordnet.

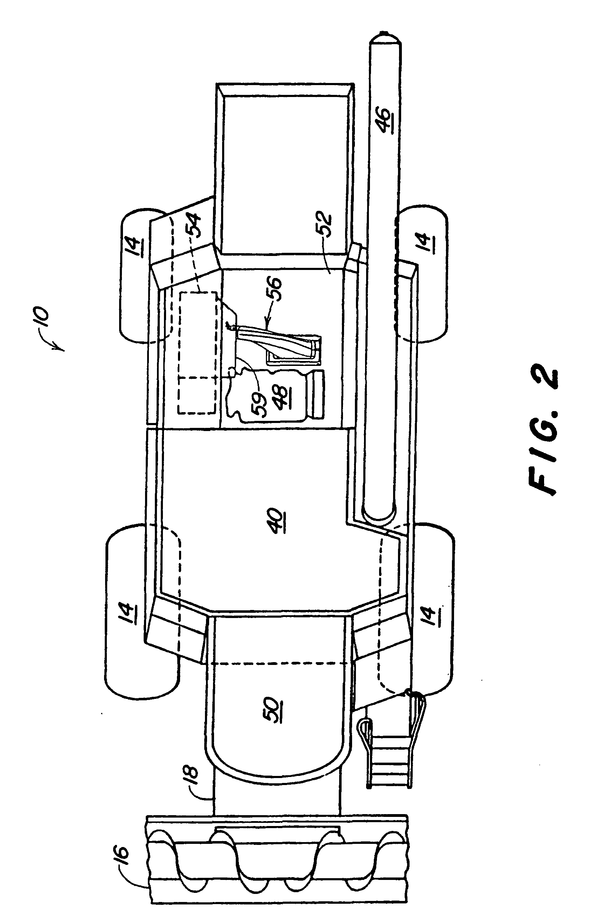

Wie in Figur 2 dargestellt, ist der Motor 48 auf einer Arbeitsplattform 52 angeordnet, die sich auf der Rückseite des Korntanks 40 befindet. Die Arbeitsplattform 52 wird verwendet, um den Motor 48 zu warten. Das Kühlsystem des Motors 48 umfasst einen Kühlventilator, einen Radiator, einen Ladeluftkühler, Ölkühler, Betriebsstoffkühler, Kondensoren und ein bei 54 angeordnetes, selbstreinigendes rotierendes Sieb. Ein derartiges Kühlsystem ist in der US 4 906 262 A offenbart, die durch Verweis hier mit aufgenommen wird.

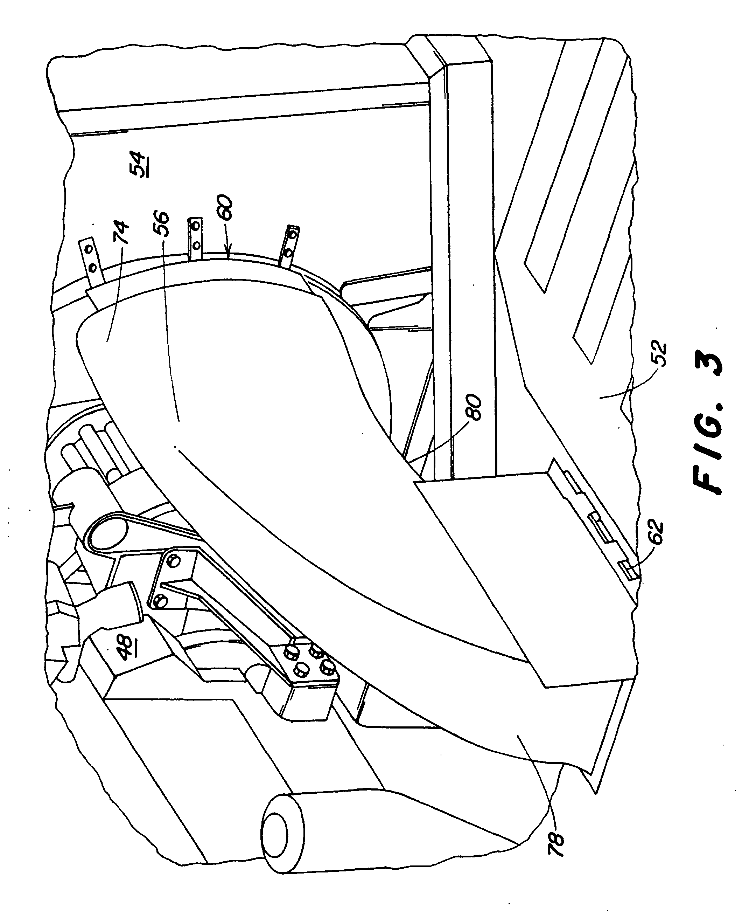

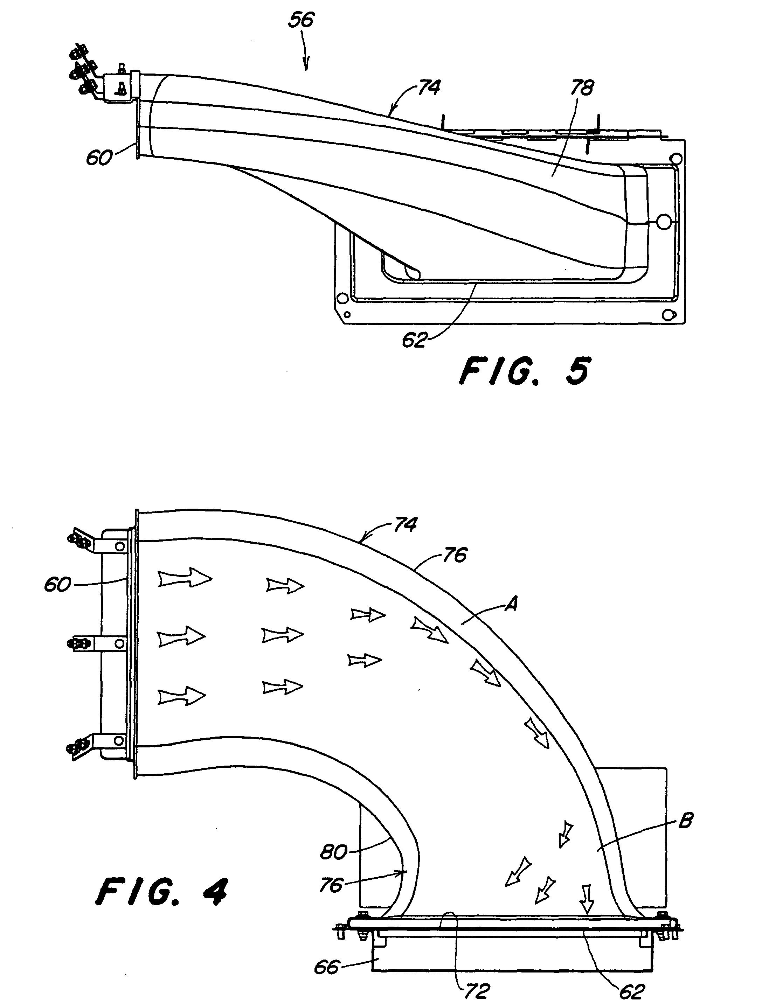

Eine Kanaleinrichtung 56 zur Aufnahme eines Teils des Kühlluftstroms ist hinter dem Motor 48 und pneumatisch stromab des Kühlventilators des Motors 48 angeordnet. Die Kanaleinrichtung 56 ist am besten in den Figuren 3, 4 und 5 illustriert. Wenn vom Kühlventilator Kühlluft durch die Wärmetauscher und das rotierende Sieb gezogen wird, bildet sie einen quer verlaufenden Luftstrom. Der größte Teil dieses horizontalen Luftstroms wird dem Motor 48 durch ein Leitblech 59 zugeführt, jedoch fängt ein Einlass 60 der Kanaleinrichtung 56 einen Teil dieses Luftstroms ab. Die Struktur der Kanaleinrichtung 56 ändert die Richtung des Luftstroms, so dass er vertikal nach unten in Richtung auf die Axialtrenneinrichtung 24 zu fließt.

Die Luft wird von der Kanaleinrichtung 56 durch den Auslass 62 ausgestoßen, der mit einer in der Arbeitsplattform 54 angeordneten Öffnung ausgerichtet ist. Wenn der nunmehr vertikal nach unten gerichtete Luftstrom durch den Auslass 62 geleitet wird, stößt er auf den Deflektor 66. Der Deflektor 66 teilt den Luftstrom in zwei Komponenten, eine nach vorn gerichtete Komponente und eine nach hinten gerichtete Komponente. Der Deflektor 66 ändert die Richtung des Luftstroms von einem vertikal nach unten gerichteten Luftstrom in einen im Wesentlichen horizontalen Luftstrom, der nach vorn und nach hinten gerichtete Komponenten aufweist, die dazu dienen, Verunreinigungen von der Oberseite der Axialtrenneinrichtungen 24 zu blasen.

Die nach vorn und hinten gerichteten Komponenten des horizontalen Luftstroms verhindern, dass sich Staub und andere Verunreinigungen auf der Oberseite der Axialtrenneinrichtung 24 und ihren Antriebsverbindungen ansammeln. Vordere zum Ausstoß dienende Öffnungen 68 können in den Seitenwänden der tragenden Struktur 12 geformt sein. Diese Ausstoßöffnungen 68 können den vorderen Raum zwischen dem Deflektor 66 und den Öffnungen 68 entlüften. Durch diese Öffnungen 68 können Staub und Spreu aus dem Mähdrescher 10 ausgestoßen werden. Eine Ausstoßlücke 70 kann zwischen der Unterseite der Arbeitsplattform 54 und dem hinteren oberen Abschnitt der Axialtrenneinrichtungen 24 geformt sein.

Diese Ausstoßlücke 70 kann benutzt werden, um den rückwärtigen Raum zwischen dem Deflektor 66 und dem hinteren Abschnitt der Axialtrenneinrichtungen 24 zu entlüften.

Die Spitze 72 des Deflektors 66 ist derart positioniert, dass sie einen Teil der aus der Kanaleinrichtung 56 austretenden Luft nach vorn und einen Teil davon nach hinten zwingt. Der Deflektor 66 ist derart dimensioniert und positioniert, dass er eine große Luftmenge nach vorn zwingt, weil die Ausstoßöffnungen 68 pneumatisch ineffizienter sind als die Ausstoßlücke 70, da der Luftstrom eine Wendung um 90 Grad machen muss, um durch die Seitenwände entkommen zu können. Weniger Luft ist an der Rückseite erforderlich, da die quer ausgerichtete Aussstoßlücke 70 besser mit dem Luftstrom über die Oberseite der Axialtrenneinrichtung 24 ausgerichtet ist.

Die Kanaleinrichtung 56 umfasst eine spritzgegossene Leitung 74 aus Polyethylen, die sich zwischen ihrem Einlass 60 und Auslass 62 in einem Bogen erstreckt. Die Krümmung der gebogenen Leitung 74 leitet den Luftstrom darin allmählich von einer horizontalen Flussrichtung in eine vertikale Flussrichtung um. Diese allmähliche Umleitung der Luft hilft, den Geschwindigkeitsverlust zu minimieren, der auftreten könnte, wenn der Luftstrom umgeleitet wird. Die Leitung 74 umfasst einen verengten Abschnitt 76 in der Nähe der Stelle, an der der Luftstrom anfängt, sich vertikal zu bewegen. Ein großer Teil des Luftstroms innerhalb der Leitung 74 befindet sich in der Nähe der gekrümmten Wand 78 der Leitung 74 am Punkt A. Wenn der Luftfluss in diesem Bereich durch die gekrümmte Wand 78 nach unten in einen vertikalen Fluss in der Nähe des Punktes B umgelenkt wird, kann die Luft anfangen, sich von der gekrümmten Wand 78 auszubreiten und sich in Richtung auf die gegenüberliegende Wand 80 zu bewegen. Wenn dem Luftstrom in diesem Bereich erlaubt wird, sich hinreichend auszubreiten, könnte er dahin tendieren, sich an dieser Stelle in der Leitung 74 in eine nach oben gerichtete Richtung zu verwirbeln. Das Vorhandensein eines verengten Abschnitts 76 bewirkt jedoch eine Beschränkung an dieser speziellen Stelle, die die Luft an dieser Stelle im Wesentlichen daran hindert, sich nach oben zu verwirbeln. Wenn die Luft in diesem Bereich anfängt, sich von der gekrümmten Wand 78 der Leitung 74 auszubreiten, wird sie auf die gegenüberliegende Wand 80, die sich an der Stelle des verengten Abschnitts 76 befindet, treffen, bevor sie nach oben wirbeln kann. Die auf die gegenüberliegende Wand 80 auftreffende Luft wird sich weiter in der Leitung 74 in Richtung auf den Auslass 62 zu bewegen. Der sich ausbreitende Luftfluss tendiert an dieser allgemeinen Stelle dahin, auf die gegenüberliegende Wand 80 zu treffen, bevor die Luft eine nach oben gerichtete Bahn erreicht, und wird daher bestrebt sein, die gegenüberliegende Wand 80 auf einer nach unten gerichteten Bahn zu treffen und sich nach dem Auftreffen auf die gegenüberliegende Wand 80 weiterhin nach unten bewegen. Wenn es dem Luftstrom ermöglicht würde, innerhalb der Leitung 74 nach oben zu verwirbeln, würde die verwirbelte Luft den Luftfluss durch die Leitung 74 behindern, wodurch die Fähigkeit der Leitung 74, Verunreinigungen von der Oberseite der Axialtrenneinrichtungen 24 zu blasen, vermindert würde.

Der Auslass 62 der Leitung 74 erweitert sich vom verengten Abschnitt 76 nach außen, um eine trompetenartige Form zu bilden, wodurch er eine größere Querschnittsfläche als im verengten Abschnitt 76 bildet. Das ermöglicht dem Luftstrom, die Leitung 74 leicht mit wenig Widerstand zu verlassen, wodurch der Fluss durch die Leitung 74 verbessert wird.

Die Leitung 74 ist so dimensioniert, dass sie eine relativ kleine Struktur nahe des Kühlventilators bildet. Eine kleinere Leitung 74 vermindert die Blockage der Luft im Kühlsystem. Das erlaubt der Luft, freier durch das Kühlsystem zu strömen, wodurch die Effizienz des Kühlsystems verbessert wird. Außerdem wird eine relativ kleine Struktur in der Nähe des Motors 48 einen Bediener bei Wartungsarbeiten, wie Motorölstandsprüfungen, weniger behindern. Dadurch, dass die Leitung 74 derart geschaffen ist, dass sie einen verbesserten Luftstrom durch die Leitung 74 ermöglicht, kann sie relativ klein bemessen werden, wodurch eine geringere Behinderung des Luftstroms durch das Kühlsystem und den Kühlventilator und eine geringere Beeinträchtigung bei der Wartung des Motors entsteht. Die Leitung 74 ist auch relativ nahe zum Ventilator positioniert, so dass weniger Luft vom Einlass 60 zurückgeblasen wird, was anderenfalls den Luftstrom durch das Kühlsystem und den Ventilator behindern könnte. Das Positionieren der Leitung 74 in der Nähe des Ventilators ermöglicht es der Leitung 74 auch, sich schneller bewegende Luft vom Ventilator zu empfangen, was dazu dient, die Geschwindigkeit des Luftstroms durch die Leitung 74 zu vergrößern, wodurch Verunreinigungen effektiver von den Oberseiten der Axialtrenneinrichtungen 24 fortgeblasen werden, so dass eine kleinere Leitung 74 verwendbar ist. Der Einlass 60 ist im äußeren radialen Randbereich des Ventilators positioniert, um vom Ventilator einen Luftstrom mit relativ hoher Geschwindigkeit zu erhalten.

## Patentansprüche

1. Mähdrescher (10) mit einer Axialtrenneinrichtung (24) für Erntegut, einem Ventilator und einer Kanaleinrichtung (56), die einen vom Ventilator erzeugten Luftstrom zur Oberseite der Axialtrenneinrichtung (24) leitet, um Verunreinigungen von ihr fortzublasen, wobei die Kanaleinrichtung (56) eine Leitung (74) umfasst, die einen Einlass (60), der sich im Wesentlichen horizontal bewegende Luft vom Ventilator aufnimmt, und einen Auslass (62), aus dem Luft im Wesentlichen vertikal nach unten ausströmt, aufweist, **dadurch gekennzeichnet, dass** die Leitung (74) oberhalb des Auslasses (62) und in dessen Nähe einen verengten Abschnitt (76) aufweist, der eine Einschränkung des Luftstroms in der Leitung (74) bildet, um zu verhindern, dass Luft in der Nähe des verengten Abschnitts (76) nach oben wirbelt.

2. Mähdrescher (10) nach Anspruch 1, **dadurch gekennzeichnet, dass** sich der Auslass (62) vom verengten Abschnitt (76) nach außen erweitert und eine größere Querschnittsfläche als der verengte Abschnitt (76) der Leitung (74) bildet.

3. Mähdrescher (10) nach Anspruch 1 oder 2, **dadurch gekennzeichnet, dass** sich die Leitung (74) zwischen dem Einlass (60) und dem Auslass (62) in einem Bogen erstreckt.

4. Mähdrescher (10) nach einem der Ansprüche 1 bis 3, **dadurch gekennzeichnet, dass** unterhalb des Auslasses ein Deflektor (66) angeordnet ist, der den Luftstrom teilweise nach vorn und teilweise nach hinten umlenkt.

## Claims

1. Combine harvester (10), having an axial flow separator device (24) for crops, a ventilator and a channel device (56), which conducts an airflow generated by the ventilator to the upper side of the axial flow separator device (24) in order to blow away impurities from said device, the channel device (56) comprising a pipe (74), which has an inlet (60), which receives essentially horizontally moving air from the ventilator, and an outlet (62), out of which air flows essentially vertically downwardly, **characterised in that** the pipe (74), above the outlet (62) and in the vicinity thereof, has a constricted portion (76) which forms a restriction of the airflow in the pipe (74) in order to prevent air from swirling upwardly in the vicinity of the constricted portion (76).

2. Combine harvester (10) according to claim 1, **characterised in that** the outlet (62) widens outwardly from the constricted portion (76) and forms a larger cross-sectional area than the constricted portion (76) of the pipe (74).

3. Combine harvester (10) according to claim 1 or 2, **characterised in that** the pipe (74) extends in an arc between the inlet (60) and the outlet (62).

4. Combine harvester (10) according to one of the claims 1 to 3, **characterised in that** a deflector (66) is disposed underneath the outlet and diverts the airflow partially forwards and partially backwards.

## Revendications

1. Moissonneuse-batteuse (10) comportant un séparateur axial (24) pour la récolte, un ventilateur et un dispositif à canal (56), par lequel le flux d'air généré par le ventilateur est guidé vers le côté supérieur du séparateur axial (24) pour souffler les impuretés à distance de ce dernier, le dispositif à canal (56) comportant une conduite (74), qui est munie d'une admission (60), qui reçoit l'air soufflé sensiblement horizontalement par le ventilateur, et d'une sortie (62), par laquelle l'air est expulsée sensiblement verticalement vers le bas, **caractérisée en ce que** la conduite (74) comporte, au-dessus de la sortie (62) et à proximité de celle-ci, un tronçon rétréci (76) qui forme un rétrécissement du flux d'air dans la conduite (74) pour empêcher que l'air tourbillonne vers le haut au voisinage du tronçon rétréci (76).

2. Moissonneuse-batteuse (10) selon la revendication 1, **caractérisée en ce que** la sortie (62) s'élargit à partir du tronçon rétréci (76) vers l'extérieur et forme une section transversale plus grande que celle du tronçon rétréci (76) de la conduite (74).

3. Moissonneuse-batteuse (10) selon la revendication 1 ou 2, **caractérisée en ce que** la conduite (74) s'étend en courbe entre l'admission (60) et la sortie (62).

4. Moissonneuse-batteuse (10) selon l'une quelconque des revendications 1 à 3, **caractérisée en ce que** en dessous de la sortie (62) est agencé un déflecteur (66), par lequel le flux d'air est dévié en partie vers l'avant et en partie vers l'arrière.
